Europäisches Patentamt

European Patent Office

Office européen des brevets

(19)

(11) Veröffentlichungsnummer : **0 098 488**
**B1**

(12) **EUROPÄISCHE PATENTSCHRIFT**

(45) Veröffentlichungstag der Patentschrift :
22.01.86

(51) Int. Cl.⁴ : **C 08 F 210/02**, C 08 F   2/34

(21) Anmeldenummer : **83106207.0**

(22) Anmeldetag : **25.06.83**

(54) **Verfahren zur Herstellung von Ethylen-Acrylsäureester-Copolymerisaten in einem Zweizonen-Reaktor bei Drücken oberhalb 500 bar.**

(30) Priorität : **06.07.82 DE 3225171**

(43) Veröffentlichungstag der Anmeldung :
**18.01.84 Patentblatt 84/03**

(45) Bekanntmachung des Hinweises auf die Patenterteilung : **22.01.86 Patentblatt 86/04**

(84) Benannte Vertragsstaaten :
**AT BE DE FR GB**

(56) Entgegenhaltungen :
**DE-A- 1 809 045**
**GB-A- 1 090 823**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Werner, Michael, Dr.**
**Harzburger Weg 21**
**D-6800 Mannheim 33 (DE)**
Erfinder : **Oeder, Dieter, Dr.**
**Antoniusstrasse 1**
**D-5047 Wesseling (DE)**
Erfinder : **Brandstetter, Franz, Dr.**
**Ritterbueschel 45**
**D-6730 Neustadt (DE)**
Erfinder : **Gropper, Hans, Dr.**
**Sternstrasse 155**
**D-6700 Ludwigshafen (DE)**
Erfinder : **Weiss, Frank, Dr.**
**Rossdorfer Strasse 77**
**D-6100 Darmstadt (DE)**

EP 0 098 488 B1

## Beschreibung

Die Erfindung betrifft ein Verfahren zur Herstellung von Ethylen-Acrylsäureester-Copolymerisaten in einem kontinuierlich betriebenen rohrförmigen Polymerisationssystem bei Drücken von 500 bis 5 000 bar und Temperaturen von 50 bis 450 °C in Gegenwart von radikalisch zerfallenden Polymerisationsinitiatoren, indem man dem Polymerisationssystem an dessen Einlaßstelle und gleichzeitig an einer zweiten Stelle hinter der Einlaßstelle entlang des Polymerisationssystems, wo die Reaktionstemperatur ein Maximum überschritten hat, ein Gemisch aus Ethylen, Acrylsäureester, Initiator und gegebenenfalls Regler zuführt.

Es ist bereits bekannt, bei der Hochdruckpolymerisation von Ethylen den Ethylenstrom in mehrere Teilströme aufzuteilen und dann einen dieser Teilströme nach dem Erwärmen auf Anspringtemperatur in den Anfang eines röhrenförmigen Reaktors einzuleiten. Der andere bzw. die anderen Teilströme werden dann bei diesem bekannten Verfahren kalt an mehreren in Strömungsrichtung des polymerisierenden Ethylens hintereinander liegenden Stellen des Reaktors zugeführt. Das kalte Ethylen wird dabei an oder kurz hinter den Stellen des Reaktors eingeleitet, wo das Polymerisationsgemisch im Reaktor die maximal zulässige Polymerisationstemperatur überschritten hat. Dabei wird die Temperatur des kalt eingeleiteten Ethylens, welches ebenfalls Initiator enthält, so bemessen, daß die Temperatur nach der Zumischung im Reaktor nicht unter die Anspringtemperatur der Ethylenpolymerisation, die von dem verwendeten Katalysator abhängt, sinkt. Auf diese Weise ist es möglich, den Umsatz des Ethylens zu Polyethylen pro Durchsatz zu erhöhen. Bei diesem bekannten Verfahren werden dem Ethylen z. B. vor oder nach der Komprimierung geringe Mengen Luftsauerstoff als Polymerisationsinitiator zugegeben. Auch können statt Luftsauerstoff Peroxide oder Hydroperoxide oder Mischungen von Peroxidverbindungen zugefügt werden (vgl. US-Patentschrift 3 725 378).

Es ist auch bereits bekannt, zur Herstellung von Ethylenpolymerisaten bzw. Ethylencopolymerisaten ein Gemisch aus Ethylen, Initiator, Regler und gegebenenfalls Comonomer, das ein Acrylsäureester sein kann, einem rohrförmigen Polymerisationssystem an dessen Einlaßstelle und gleichzeitig an einer zweiten Stelle hinter der Einlaßstelle, wo die Reaktionstemperatur ein Maximum erreicht bzw. überschritten hat, zuzuführen. Dabei werden, bedingt durch das unterschiedliche Polymerisationsverhalten von Ethylen und Acrylsäureestern unter den Bedingungen der Hochdruckcopolymerisation, Copolymerisate erhalten, in denen die Monomere ungleichmäßig verteilt sind (vgl. US-Patentschrift 4 076 919).

Der vorliegenden Erfindung liegt die Aufgabe zugrunde, ein verbessertes Verfahren zur Copolymerisation von Ethylen mit Acrylsäureestern in einem rohrförmigen Polymerisationssystem aufzufinden, bei dem die Verteilung der Acrylsäureesteranteile im Copolymerisat verbessert wird und unter Beibehaltung der guten allgemeinen Polymerisateigenschaften die Ausziehfähigkeit des Copolymerisats zu dünnen Folien verbessert und die Neigung der Folien zum Verblocken verringert wird.

Die Aufgabe wird erfindungsgemäß dadurch gelöst, daß an der Einlaßstelle 55 bis 75 % und an der zweiten Zuführstelle 25 bis 45 % der Acrylsäureestermenge zudosiert wird und die Maximaltemperatur hinter der zweiten Zuführstelle 20 bis 50 °C niedriger ist als die Maximaltemperatur vor der zweiten Zuführstelle. Bevorzugt ist die Maximaltemperatur 30 bis 40 °C niedriger.

Unter Ethylen-Acrylsäureester-Copolymerisaten werden die Copolymerisate des Ethylens verstanden, die bei den angegebenen Temperatur- und Druckverhältnissen herstellbar sind. Bevorzugt werden die Copolymerisate durch Copolymerisation von Gemischen aus 100 Gewichtsteilen Ethylen und 0,1 bis 1,5 Gewichtsteilen Acrylsäureester erhalten. Bevorzugt ist auch ein Temperaturbereich von 150 bis 350 °C und ein Druckbereich von 1 500 bis 3 000 bar. Der Ausdruck Ethylen-Acrylsäureester-Copolymerisate umfaßt Copolymerisate mit Gehalten an einpolymerisiertem Comonomerenanteil von 0,2 bis zu 10,0, bevorzugt 0,5 bis 5,0 Gewichtsprozent, die einen Schmelzindex von 0,1 bis 25 g/10 min, bestimmt nach ASTM-D 1238-65 T bei einer Temperatur von 190 °C und einem Auflagegewicht von 2,16 kg, und eine Dichte von 0,890 bis 0,934 g/cm³, gemessen nach DIN 53 479, aufweisen.

Als Acrylsäureester kommen sämtliche mit Ethylen bei den angegebenen Temperaturen und Druckverhältnissen copolymerisierbare Acrylsäureester in Betracht. Solche Comonomere sind z. B. Ester der Acryl- und Methacrylsäure mit $C_1$- bis $C_8$-, vorzugsweise $C_1$- bis $C_6$-Alkanolen. Insbesondere bevorzugt sind Methyl- und n-Butylacrylat.

Das Ethylen wird mit den Acrylsäureestern in Gegenwart radikalischer Initiatoren copolymerisiert. Unter radikalischen Polymerisationsinitiatoren sollen diejenigen Katalysatoren verstanden werden, die auch für die Homopolymerisation des Ethylens unter hohem Druck verwendet werden. Geeignet ist beispielsweise Sauerstoff, zweckmäßigerweise in Mengen von 2 bis 100 Mol.-ppm, bezogen auf das zu polymerisierende Ethylen. In Betracht kommen außerdem Peroxide und andere Radikalbildner sowie Gemische von Peroxiden, die unterschiedliche Zersetzungspunkte haben und Hydroperoxide sowie Mischungen aus Sauerstoff und Peroxiden und/oder Hydroperoxiden. Als Beispiele für Peroxide und Hydroperoxide seien genannt: tert.-Butylperoxypivalat, Di-tert.-butylperoxid, tert.-Butylhydroperoxid, tert.-Butylperbenzoat, p-Menthanhydroperoxid und Dilauroylperoxid. Unter radikalischen Polymerisationsinitiatoren sollen auch Verbindungen wie Azoisobuttersäuredinitril verstanden werden. Man kann auch Mischungen aus Sauerstoff und einem oder mehreren Peroxiden verwenden.

In einer besonderen Ausgestaltung des Verfahrens arbeitet man in Gegenwart üblicher Polymerisationsregler. Mit Hilfe der Polymerisationsregler ist es möglich, den Schmelzindex der entstehenden Ethylencopolymerisate einzustellen. Als Regler eignen sich beispielsweise Wasserstoff, Ketone, Alkohole, Ether oder normale und verzweigte Kohlenwasserstoffe. Vorzugsweise verwendet man Propan, Propylen, Methylethylketon oder Propionaldehyd. Die Polymerisationsregler werden im allgemeinen in Mengen von 0,2 bis 5 Mol.-%, bezogen auf das zu polymerisierende Ethylen, eingesetzt.

Die Copolymerisation wird im allgemeinen in Abwesenheit eines Lösungsmittels durchgeführt. Die geringen Mengen eines inerten Lösungsmittels, wie Benzol, Mineralöl oder andere inerte Lösungsmittel, in denen die Polymerisationsinitiatoren gelöst werden, können gegenüber den anderen Einsatzstoffen vernachlässigt werden. Wird mit Sauerstoff als Polymerisationsinitiator gearbeitet, kann jegliches Lösungsmittel entfallen.

Das Verfahren läßt sich unter Anwendung der üblichen kontinuierlich betriebenen röhrenförmigen Hochdruckpolymerisationssysteme (Rohrreaktoren) ausführen. Unter Rohrreaktoren versteht man rohrförmige Polymerisationsgefäße, deren Verhältnis Länge zum Durchmesser der druckfesten Rohre im Bereich 10 000 bis 60 000 zu 1 liegt. Angaben über Ethylenhochdruckpolymerisationsverfahren, bei denen Rohrreaktoren benutzt werden, finden sich beispielsweise in « Ullmanns Encyklopädie der technischen Chemie », 1980, 4. Auflage, Band 19, Seiten 167 bis 178.

Die Copolymerisation des Ethylens gemäß vorliegendem Verfahren wird bevorzugt durch Zufuhr von Luftsauerstoff initiiert. Das gasförmige Gemisch aus Ethylen, Acrylsäureester, Sauerstoff und Regler wird an der Einlaßstelle und gleichzeitig an einer zweiten Stelle hinter der Einlaßstelle entlang des Rohrreaktors in Strömungsrichtung des polymerisierenden Ethylens, wo die Reaktionstemperatur ein Maximum überschritten hat, entsprechend dem Verfahren der oben zitierten US-Patentschriften 3 725 378 und 4 076 919 dem Reaktor zugeführt. Unter Einlaßstelle wird im allgemeinen der Anfang des rohrförmigen Reaktors verstanden. Der Hauptstrom wird dabei am Anfang des Reaktors zugeleitet, der Nebenstrom wird dem Reaktor in bekannter Weise in der Nähe der zweiten Stelle, an der sich ein Temperaturmaximum ausbildet, zugeführt. Durch diese Maßnahme wird die Reaktionsführung des bekannten Zweizonen-Rohrreaktors erhalten.

In dem erfindungsgemäß verbesserten Verfahren wird an der Einlaßstelle und an der zweiten Zuführstelle entlang des Reaktors nicht ein konstantes Gemisch aus Ethylen, Acrylsäureester, Initiator und gegebenenfalls Regler eingeleitet, sondern es wird an der Einlaßstelle 55 bis 75 % und an der zweiten Zufuhrstelle 25 bis 45 % der zur Copolymerisation vorgesehenen Acrylsäureestermenge zudosiert. Dabei soll das Temperaturmaximum in der ersten Reaktorzone, die von der Einlaßstelle bis zur zweiten Zuführstelle reicht, 20 bis 50 °C, bevorzugt 30 bis 40 °C, höher sein als in der zweiten Reaktorzone, die ab der zweiten Zufuhrstelle beginnt und am Reaktorausgang endet. Die in den beiden Reaktionszonen entstehenden Temperaturmaxima werden durch die separate Zugabe der in den jeweiligen Teilströmen benötigten Initiatormengen eingestellt.

Die erfindungsgemäße Dosierung von Acrylsäureester zur ersten und zweiten Zone des Zweizonenreaktors führt zu Ethylen-Acrylsäureester-Copolymerisaten mit verbesserten Produkteigenschaften. Durch diese Maßnahme kann eine Verbesserung der Verteilung der Acrylsäureesteranteile im Copolymerisat erreicht werden und die Verarbeitung zu dünnen Folien mit verringerter Neigung zum Verblocken verbessert werden.

## Beispiele

Die Copolymerisation des Ethylens mit Acrylsäure-n-butylester wurde in allen Fällen in einem rohrförmigen Reaktor durchgeführt. Das Ethylen wurde in zwei separaten Gasströmen mit dem Mengenverhältnis 1 : 1 mit der jeweils angegebenen Sauerstoffmenge und der notwendigen Reglermenge versetzt und bis auf Reaktionsdruck aufkomprimiert. Von den Gassträngen wurde in allen Fällen der eine der Einlaßstelle des Reaktors zugeführt und der andere an einer zweiten Gaszufuhrstelle etwa nach 1 : 3 der gesamten Reaktorlänge, nachdem sich die Reaktion in dem ersten Reaktorteil mit einem Temperaturmaximum ausgebildet hatte und die Temperatur des Gemisches schon wieder am Abklingen war, dem Reaktor zugeführt. Durch diese Maßnahme bildeten sich zwei Reaktionszonen in dem rohrförmigen Reaktor (Zweizonen-Reaktor).

Der Reaktor hatte in beiden Reaktionszonen ein Längen/Durchmesserverhältnis von etwa 10 000. Zur Abführung eines Teils der Reaktionswärme wurden die Rohrwände von außen mit Wasser gekühlt. Bei der Durchführung der in den Beispielen angeführten Versuche wurde die zur Copolymerisation benötigte Acrylsäureestermenge etwa im Verhältnis von 3 : 2 auf den Gasstrang zur ersten Reaktionszone und den Gasstrang zur zweiten Zufuhrstelle aufgeteilt. Bei der Durchführung der Vergleichsbeispiele wurde die benötigte Acrylsäureestermenge ausschließlich dem Gasstrang zugegeben, der zur Einlaßstelle des Reaktors führt. Das anfallende Copolymerisat wurde in bekannter Weise in den, dem Reaktor nachgeschalteten Abscheidern vom nicht umgesetzten Monomeren abgetrennt.

## Beispiel 1 (2 und 3)

Dem oben beschriebenen Reaktor wurde auf der Eingangsseite der ersten Reaktionszone ein Gemisch bestehend aus

3

Beispiel 1 : 996 900
Beispiel 2 : 993 600
Beispiel 3 : 988 000
Gewichtsteilen/Stunde Ethylen und
Beispiel 1 :   3 100
Beispiel 2 :   6 400
Beispiel 3 : 12 000
Gewichtsteilen/Stunde Acrylsäure-n-butylester, welches auf einen Druck von 2 700 bar aufkomprimiert ist, zugeführt. Als Polymerisationsstarter wurde dem Gemisch
Beispiel 1 : 16,9
Beispiel 2 : 17,6
Beispiel 3 : 21,2
Mol ppm Sauerstoff, bezogen auf das Ethylen, zugesetzt.
An der zweiten Zufuhrstelle wurde dem Reaktor ein Gemisch bestehend aus
Beispiel 1 : 998 000
Beispiel 2 : 996 100
Beispiel 3 : 992 500
Gewichtsteilen/Stunde Ethylen und
Beispiel 1 : 2 000
Beispiel 2 : 3 900
Beispiel 3 : 7 500
Gewichtsteilen/Stunde Acrylsäure-n-butylester und als Polymerisationsstarter
Beispiel 1 : 3,1
Beispiel 2 : 3,8
Beispiel 3 : 5,1
Mol ppm Sauerstoff, bezogen auf das Ethylen, zugesetzt.
Durch die freiwerdende Reaktionswärme, die nicht über die Reaktorwand an das Kühlmittel abgegeben wurde, erreichte das Reaktionsgemisch im ersten Teil des Reaktors eine maximale Temperatur von 310 °C und im zweiten Teil des Reaktors nach der zweiten Zufuhrstelle eine maximale Temperatur von 270 °C.
Als Molekulargewichtsregler wurde Propionaldehyd zugesetzt. Die Reglermenge wurde so bemessen, daß sich ein Molekulargewicht entsprechend eines Schmelzindex von
Beispiel 1 : 0,34
Beispiel 2 : 0,34
Beispiel 3 : 0,32
g/10 min, gemessen nach DIN 53 735, einstellte.
Auf diese Weise wurden
Beispiel 1 : 214 000
Beispiel 2 : 230 000
Beispiel 3 : 239 000
Gewichtsteile eines Ethylen-Acrylsäure-n-butylester-Copolymerisats erhalten, dessen Acrylsäureestergehalt
Beispiel 1 : 1,2
Beispiel 2 : 1,9
Beispiel 3 : 3,7
Gew.-% betrug.
Der Acrylsäureestergehalt wurde aus dem Gesamtsauerstoffgehalt (Elementaranalyse) errechnet, wobei der bestimmte Gesamtsauerstoffgehalt vor der Umrechnung um einen Anteil von 0,1 Gew.-% vermindert wurde, der sich aus acrylsäureesterfreien Vergleichsversuchen als Sauerstoffanteil aus Regler- und Initiatormolekülen ergeben hat. Das gewonnene Copolymerisat hatte eine Dichte von
Beispiel 1 : 0,925 3
Beispiel 2 : 0,924 3
Beispiel 3 : 0,923 7
g/cm$^3$, gemessen nach DIN 53 479 ; eine Blockkraft von
Beispiel 1 : 43
Beispiel 2 : 42
Beispiel 3 : 53
N, gemessen nach DIN 53 366 (Aufblasverhältnis 1 : 2) und eine Folienausziehfähigkeit, gemessen als Folienstärke beim Folienabriß (μm), von
Beispiel 1 : 33
Beispiel 2 : 24
Beispiel 3 : 28
μm 1 : 3.

### Vergleichsbeispiel 1 (2 und 3)

Dem oben beschriebenen Reaktor wurde auf der Eingangsseite der ersten Reaktionszone ein Gemisch, bestehend aus
Vergleichsbeispiel 1 : 994 990
Vergleichsbeispiel 2 : 989 830
Vergleichsbeispiel 3 : 980 435
Gewichtsteilen/Stunden Ethylen und
Vergleichsbeispiel 1 :  5 010
Vergleichsbeispiel 2 : 10 170
Vergleichsbeispiel 3 : 19 565
Gewichtsteilen/Stunden Acrylsäure-n-butylester, welches auf einen Druck von 2 700 bar aufkomprimiert war, zugeführt. An der zweiten Zufuhrstelle wurde dem Reaktor ausschließlich Ethylen zugeführt. Als Polymerisationsstarter wurde dem Gemisch auf der Eingangsseite des Reaktors.
Vergleichsbeispiel 1 : 17,2
Vergleichsbeispiel 2 : 17,3
Vergleichsbeispiel 3 : 21,0
Mol ppm Sauerstoff bezogen auf das Ethylen und dem Ethylen für die zweite Zufuhrstelle
Vergleichsbeispiel 1 : 4,4
Vergleichsbeispiel 2 : 4,6
Vergleichsbeispiel 3 : 4,5
Mol ppm Sauerstoff bezogen auf das Ethylen zugesetzt.

Durch die freiwerdende Reaktionswärme, die nicht über die Reaktorwand an das Kühlmedium abgegeben wurden, erreichte das Reaktionsgemiscn im ersten Teil des Reaktors eine maximale Temperatur von 310 °C und im zweiten Teil des Reaktors nach der zweiten Zufuhrstelle eine maximale Temperatur von 270 °C. Als Molekulargewichtsregler wurde dem Reaktionsgemisch Propionaldehyd zugesetzt. Die Reglermenge wurde so bemessen, daß sich ein Molekulargewicht entsprechend eines Schmelzindexes von
Vergleichsbeispiel 1 : 0,33
Vergleichsbeispiel 2 : 0,32
Vergleichsbeispiel 3 : 0,34
g/10 min, gemessen nach DIN 53 735 einstellte. Auf diese Weise wurden
Vergleichsbeispiel 1 : 215 000
Vergleichsbeispiel 2 : 228 000
Vergleichsbeispiel 3 : 237 000
Gewichtsteile eines Ethylen-Acrylsäure-n-butylester-Copolymeren erhalten, dessen Acrylsäureestergehalt
Vergleichsbeispiel 1 : 1,1
Vergleichsbeispiel 2 : 1,8
Vergleichsbeispiel 3 : 3,8
Gew.-% betrug.
Das Copolymerisat hatte eine Dichte von
Vergleichsbeispiel 1 : 0,924 9
Vergleichsbeispiel 2 : 0,924 4
Vergleichsbeispiel 3 : 0,924 0
$g/cm^3$ gemessen nach DIN 53 479, eine Blockkraft von
Vergleichsbeispiel 1 : 62
Vergleichsbeispiel 2 : 60
Vergleichsbeispiel 3 : 66
N, gemessen nach DIN 53 366 (Aufblasverhältnis 1 : 2) und eine Folienausziehfähigkeit, gemessen als Folienstärke beim Folienabriß in $\mu$m, von
Vergleichsbeispiel 1 : 39
Vergleichsbeispiel 2 : 34
Vergleichsbeispiel 3 : 37
bei einem Folienaufblasverhältnis von 1 : 3.

**Patentansprüche**

1. Verfahren zur Herstellung von Ethylen-Acrylsäure-ester-Copolymerisaten in einem kontinuierlich betriebenen rohrförmigen Polymerisationssystem bei Drücken von 500 bis 5 000 bar und Temperaturen von 50 bis 450 °C in Gegenwart von radikalisch zerfallenden Polymerisationsinitiatoren, indem man dem Polymerisationssystem an dessen Einlaßstelle und gleichzeitig an einer zweiten Stelle hinter der Einlaßstelle entlang des Polymerisationssystems, wo die Reaktionstemperatur ein Maximum überschritten hat, ein Gemisch aus Ethylen, Acrylsäureester, Initiator und gegebenenfalls Regler zuführt, dadurch gekennzeichnet, daß an der Einlaßstelle 55 bis 75 % und an der zweiten Zuführstelle 25 bis 45 % der Acrylsäureestermenge zudosiert wird und die Maximaltemperatur hinter der zweiten Zuführstelle 20 bis 50 °C niedriger ist als die Maximaltemperatur vor der zweiten Zuführstelle.

2. Verfahren nach Anspruch 1, dadurch gekennzeichnet, daß die Maximaltemperatur 30 bis 40 °C niedriger ist.


**Claims**

1. A process for the preparation of copolymers of ethylene with acrylic acid esters in a continuous-flow tubular polymerization system at pressures of from 500 to 5 000 bars and temperatures of from 50 to 450 °C in the presence of polymerization initiators which decompose into free radicals, a mixture of ethylene, acrylic acid ester, initiator and optional regulator being fed into the polymerization system at its inlet and simultaneously at a second point downstream of the inlet, where the reaction temperature has exceeded a maximum, wherein 55 to 75 % and 25 to 45 % of the amount of acrylic acid ester are metered in at the inlet and the second feed point respectively, and the maximum temperature downstream of the second feed point is 20 to 50 °C lower than the maximum temperature upstream of the second feed point.

2. A process as claimed in claim 1, wherein the maximum temperature is 30 to 40 °C lower.


**Revendications**

1. Procédé pour la préparation de copolymères d'éthylène et d'esters d'acide acrylique dans un système de polymérisation tubulaire fonctionnant en continu, sous des pressions de 500 à 5 000 bar et à des températures de 50 à 450 °C, en présence d'initiateurs de polymérisation se décomposant en radicaux, en introduisant un mélange d'éthylène, d'ester d'acide acrylique, d'initiateur et, le cas échéant, de régulateur dans le système de polymérisation, au point d'entrée de celui-ci et, en même temps, en un second point qui est situé en aval du point d'entrée le long du système de polymérisation et où la température de réaction a dépassé un maximum, caractérisé en ce qu'il est introduit, au point d'entrée, 55 à 75 % et, au second point d'admission, 25 à 45 % de la quantité d'ester d'acide acrylique et en ce que la température maximale en aval du second point d'admission est plus basse de 20 à 50 °C que la température maximale en amont du second point d'admission.

2. Procédé selon la revendication 1, caractérisé en ce que la température maximale est plus basse de 30 à 40 °C.